# EUROPÄISCHE PATENTSCHRIFT

(11) **EP 3 597 878 B1**
(45) Veröffentlichungstag und Bekanntmachung des Hinweises auf die Patenterteilung: **18.05.2022**
(21) Anmeldenummer: 19186526.0
(22) Anmeldetag: 16.07.2019
(51) Int. Cl.: F01N 3/20, H05B 3/82, H05B 3/06

(54) **TANKHEIZER**
TANK HEATER
CHAUFFAGE DE CITERNE

(30) Priorität: 18.07.2018 DE 102018117329
(43) Veröffentlichungstag der Anmeldung: 22.01.2020
(73) Patentinhaber: Eichenauer Heizelemente GmbH & Co. KG, 76870 Kandel (DE)
(72) Erfinder: Schlachter, Ulrich, 76863 Herxheim (DE); Walter, Steffen, 76199 Karlsruhe (DE)
(74) Vertreter: Twelmeier Mommer & Partner

(56) Entgegenhaltungen:
- EP-A1- 2 650 497
- DE-A1-102009 046 954
- DE-A1-102011 084 962
- DE-A1-102014 108 074
- DE-B3-102017 103 039

## Beschreibung

Die Erfindung betrifft eine Tankheizung für ein Kraftfahrzeug. Eine Tankheizung mit den im Oberbegriff des Anspruchs 1 angegebenen Merkmalen ist aus DE 10 2017 103 039 B3 sowie aus DE 10 2014 108 074 A1 bekannt. Die Tankheizung kann beispielsweise für einen Tank bestimmt sein, der Wasser-, Harnstofflösung oder eine andere korrosive Flüssigkeit enthält.

Tankheizungen sind im Betrieb den im Tank enthaltenen Flüssigkeiten ausgesetzt. Insbesondere bei korrosiven Flüssigkeiten, wie etwa Harnstofflösung, müssen elektrische Bauteile der Tankheizung deshalb vor Kontakt mit der Flüssigkeit geschützt werden. In der Regel wird dies mit einem Kunststoffgehäuse erreicht, in dem ein Wärmeleitkörper aus Metall zusammen mit einem oder mehreren PTC-Heizern flüssigkeitsdicht eingeschlossen ist. Das Kunststoffgehäuse kann durch Umspritzen hergestellt werden oder- aus einem Gehäuseunterteil, in das der Wärmeleitkörper und der oder die PTC-Heizer eingesetzt sind, sowie einen mit dem Unterteil verschweißten Gehäusedeckel gebildet sein.

Bei der aus EP 2 650 497 A1 bekannten Tankheizung sind PTC-Heizer in einer Tasche des Kunststoffgehäuse angeordnet und auf diese Weise zuverlässig vor Kontakt mit Harnstofflösung geschützt.

Aufgabe der vorliegenden Erfindung ist es einen Weg aufzuzeigen, wie eine Tankheizung geschaffen werden kann, die mit geringem Aufwand in einem Tank montiert werden kann, wirksam vor Schäden durch Flüssigkeit geschützt ist, mit geringem Aufwand an eine Stromquelle angeschlossen werden kann und eine wirtschaftliche Herstellung ermöglicht.

Diese Aufgabe wird durch eine Tankheizung mit den im Anspruch 1 angegebenen Merkmalen gelöst. Vorteilhafte Weiterbildungen der Erfindung sind Gegenstand von Unteransprüchen.

Bei einer erfindungsgemäßen Tankheizung sind die elektrischen Anschlüsse der von dem Kunststoffgehäuse umgebenen PTC-Heizer durch den Gehäusedeckel hindurch geführt. Der Gehäusedeckel weist dazu eine Öffnung auf, in die ein Steckverbindergehäuse eingepasst ist. Die Öffnung ist somit durch das Steckverbindergehäuse dicht verschlossen und die elektrischen Anschlüsse sind durch die Öffnung des Gehäusedeckels hindurch geführt. Die Öffnung ist dabei bevorzugt durch einen Dichtungsring abgedichtet, der in der Öffnung das Steckverbindergehäuse umgibt. Die Öffnung kann aber beispielsweise auch durch eine Klebeverbindung zwischen Gehäusedeckel und Steckverbindergehäuse dicht verschlossen sein. Elektrische Komponenten der Tankheizung lassen sich so einfach und zuverlässig vor Kontakt mit Flüssigkeit schützen. Vorteilhaft ist dabei insbesondere auch, dass sich die Tankheizung je nach Kundenwunsch problemlos mit verschiedenen Steckverbindern ausstatten und so an unterschiedliche Standards anpassen lässt. Das Steckverbindergehäuse kann also in verschiedenen Varianten passend zu den jeweils von verschiedenen Automobilherstellern geforderten Schnittstellen ausgeführt sein.

Der Dichtungsring kann in einer Nut des Deckels oder - was bevorzugt ist - in einer Nut des Steckverbindergehäuses sitzen, da dies eine Vormontage erleichtert. Der Dichtungsring kann beispielsweise ein O-Ring sein. Zur Erhöhung der Sicherheit können auch zwei oder mehr O-Ringe nebeneinander zur Abdichtung der Öffnung verwendet werden.

Vorteilhaft können verschiedene Kunststoffe für das Kunststoffgehäuse und das Steckverbindergehäuse verwendet werden, beispielsweise Polyethylen für das Kunststoffgehäuse und ein Polyamid für das Steckverbindergehäuse.

Ein PTC-Heizer der Tankheizung enthält jeweils wenigstens einen keramischen PTC-Widerstand, etwa auf Basis von Bariumtitanat, und wenigstens ein Kontaktblech, das an dem PTC-Widerstand anliegt und diesen elektrisch kontaktiert. Ein Massekontakt des PTC-Widerstands kann über den Wärmeleitkörper oder über ein zweites Kontaktblech des PTC-Heizers erfolgen.

Eine vorteilhafte Weiterbildung der Erfindung sieht vor, dass der Gehäusedeckel eine Ringwand aufweist, welche seine Öffnung umgibt. Auf diese Weise kann die Tankheizung besonders einfach in einem Tank montiert werden, nämlich indem die Tankheizung von innen in eine zu der Ringwand passende Öffnung gesteckt und dann die Ringwand mit dem Tank verschweißt wird. Die Ringwand kann kreisförmig sein oder eine andere Form haben, etwa eine elliptische oder sogar eine kantiger Form. Insbesondere bei relativ großen Tankheizungen kann die mechanische Verbindung über die Verschweißung der Ringwand mit dem Tank unzureichend sein. Es kann deshalb vorteilhaft sein, an dem Gehäusedeckel Befestigungsansätze für eine zusätzliche Verbindung mit der Tankwand vorzusehen. Wenn der Wärmeleitkörper Kühlrippen aufweist und das Gehäuseunterteil eine dazu passende Form hat, können solche Befestigungsansätze beispielsweise zwischen den Kühlrippen bzw. einen Zwischenraum zwischen den Kühlrippen überdeckend angeordnet sein.

Eine weitere vorteilhafte Weiterbildung der Erfindung sieht vor, dass der oder die PTC-Heizer in Kammern des Wärmeleitkörpers angeordnet sind, die als durch den Wärmeleitkörper hindurchgehende Kanäle ausgebildet sind. Bevorzugt weisen die Wärmeleitkörper dazu Rippen und eine diese verbindende Basis auf, in der die Kammern als Kanäle ausgebildet sind. Derartige Wärmeleitkörper können kostengünstig als Strangpressprofile hergestellt werden. Nach dem Einschieben der PTC-Heizer in die Kammern werden diese bevorzugt verpresst und so die Wärmeankopplung der PTC-Heizer an den Wärmeleitkörper verbessert. Eine Kammer hat quer zu einem Kontaktblech des PTC-Heizers verlaufende Seitenwände sowie eine Bodenwand und eine Deckenwand. Die Seitenwände haben bevorzugt eine Stärke, die größer als die Stärke der Bodenwand und größer als die Stärke der Deckenwand ist. Bevorzugt reichen die einer benachbarten Kammer zugewandten Seitenwände auf ihrer ganzen Höhe von einer Kammer bis zur benachbarten Kammer. Vorteilhaft können dadurch die Kontaktbleche der PTC-Heizer und die zugehörigen Kontaktschienen auch ohne seitliche Abwinklung unterhalb der Basis angeordnet werden, was die Fertigung vorteilhaft vereinfacht.

Um das Verpressen zu erleichtern, kann es vorteilhaft sein, wenn die Wandstärke von gegenüberliegenden Wänden des Wärmeleitkörpers ungleich ist. Der zum Verpressen erforderlich Druck lässt sich dadurch wesentlich reduzieren, da bei einer dünneren Wand weniger plastische Verformung des Wärmeleitkörpers nötig ist, bis diese mit gutem Wärmekontakt flächig an dem PTC-Heizer anliegt. Äußerst vorteilhaft weist der Wärmeleitkörper beidseits der Kammern an der Deckenwand darüberhinaus eine Nut auf. Die Nuten bewirken dabei eine Begrenzung des Verpressdruckes.

Möglich ist aber auch, PTC-Heizer mit einem separaten Bauteil, etwa einem Federclip oder -blech, gegen eine Außenfläche oder eine Innenfläche eines Wärmeleitkörpers zu drücken und so thermisch an den Wärmeleitkörper anzukoppeln.

Eine weitere vorteilhafte Weiterbildung der Erfindung sieht vor, dass der Steckverbinder zusammen mit dem Wärmeleitkörper und dem PTC-Heizer oder den PTC-Heizern eine Baugruppe bildet, die in das Unterteil des Kunststoffgehäuses eingesetzt ist. Vorteilhaft können so die elektrischen Komponenten der Tankheizung vormontiert werden. Steckkontakte des Steckverbinders können dabei vorteilhaft von Kontaktelementen des PTC-Heizers bzw. eines der PTC-Heizer gebildet werden, beispielsweise als Abschnitte von Kontaktblechen, zwischen denen ein PTC-Widerstand angeordnet ist.

Um den Zusammenbau der Tankheizung zu erleichtern, können die PTC-Heizer einen Montagerahmen aufweisen, in dem wenigstens ein PTC-Widerstand und wenigstens ein an dem PTC-Widerstand anliegendes Kontaktblech angeordnet sind. Der Montagerahmen kann beispielsweise einen Träger oder ein Fach für einen PTC-Widerstand und ein Kontaktblech bilden, so dass der PTC-Heizer als leicht handhabbare Einheit mit dem Wärmeleitkörper verbunden werden kann, etwa indem der PTC-Heizer in einen Kanal des Wärmeleitkörpers eingeschoben wird. Bevorzugt ist das Steckverbindergehäuse einstückig mit dem oder einem der Montagerahmen ausgebildet.

Bevorzugt enthält eine erfindungsgemäße Tankheizung mehrere PTC-Heizer, die elektrisch mittels einer Kontaktschiene miteinander verbunden sind, die zwischen dem Wärmeleitkörper und dem Gehäusedeckel angeordnet sein kann, aber bevorzugt zwischen dem Wärmeleitkörper und einem Boden des Unterteils des Kunststoffgehäuses angeordnet ist. Auf diese Weise können mehrere PTC-Heizer einer Tankheizung in einfacher Weise elektrisch kontaktiert werden. Zudem lässt sich so ein modularer Aufbau mit mehreren gleich ausgebildeten PTC-Heizern kostengünstig realisieren. Kontaktelemente der PTC-Heizer können beispielsweise mit Klemmlaschen oder einer Rastverbindung an die Kontaktschiene angeschlossen werden. Die Kontaktschiene kann von einer Halterung aus Kunststoff gehalten werden, beispielweise in das Unterteil des Kunststoffgehäuses eingespritzt sein oder auf die Halterung aufgeklipst sein. Wenn der Wärmeleitkörper nicht als Massekontakt genutzt wird, kann die Halterung auch zwei solche Kontaktschienen tragen.

Durch die Verbindung über Kontaktschienen lassen sich aber nicht nur die PTC-Heizer in einfachster Weise modular verbinden, sondern auch mehrere, bevorzugt gleiche, Wärmeleitelemente. In diesem Fall sorgen zwei die Wärmeleitelemente verbindende Kontaktschienen für die problemlose elektrische Verbindung der jeweilig darin angeordneten PTC-Heizer.

Weitere Einzelheiten und Vorteile der Erfindung werden an Ausführungsbeispielen unter Bezugnahme auf die beigefügten Zeichnungen erläutert. Gleiche und einander entsprechende Komponenten sind dabei mit übereinstimmenden Bezugszahlen versehen. Es zeigen:
- Fig. 1: ein Ausführungsbeispiel einer erfindungsgemäßen Tankheizung;
- Fig. 2: eine weitere Ansicht der Tankheizung;
- Fig. 3: eine Schnittansicht eines Details der Tankheizung;
- Fig. 4: eine Ansicht der Tankheizung ohne Kunststoffgehäuse;
- Fig. 5: eine weitere Ansicht der Tankheizung ohne Kunststoffgehäuse;
- Fig. 6: eine Ansicht des Steckverbinders der Tankheizung mit PTC-Heizern und Kontaktschienen; und
- Fig. 7: eine Detailansicht eines weiteren Ausführungsbeispiels einer Tankheizung.
- Fig. 8: eine Schnittansicht des Wärmeleitelementes

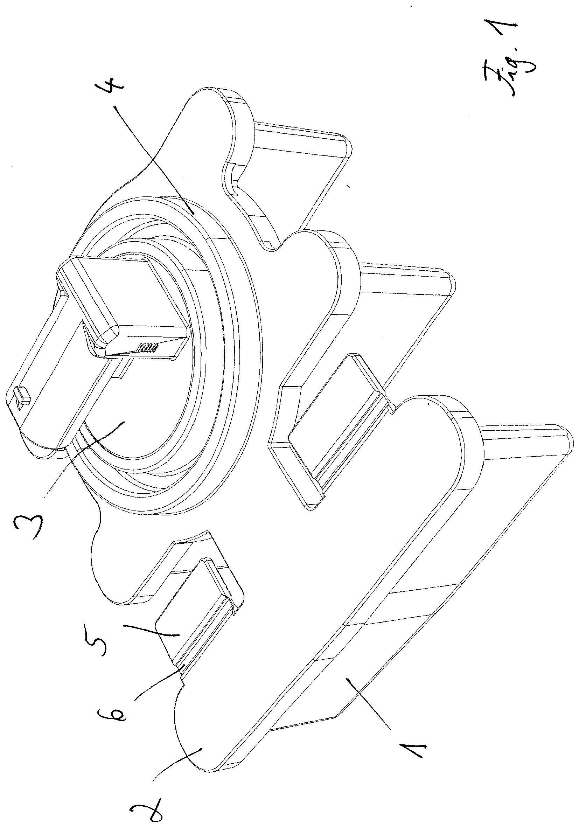

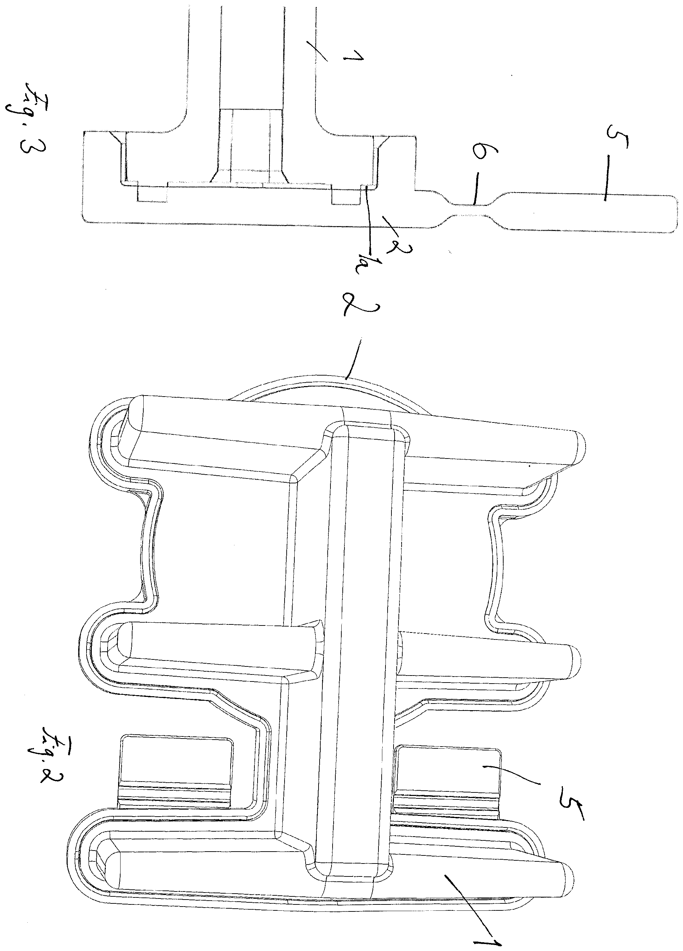

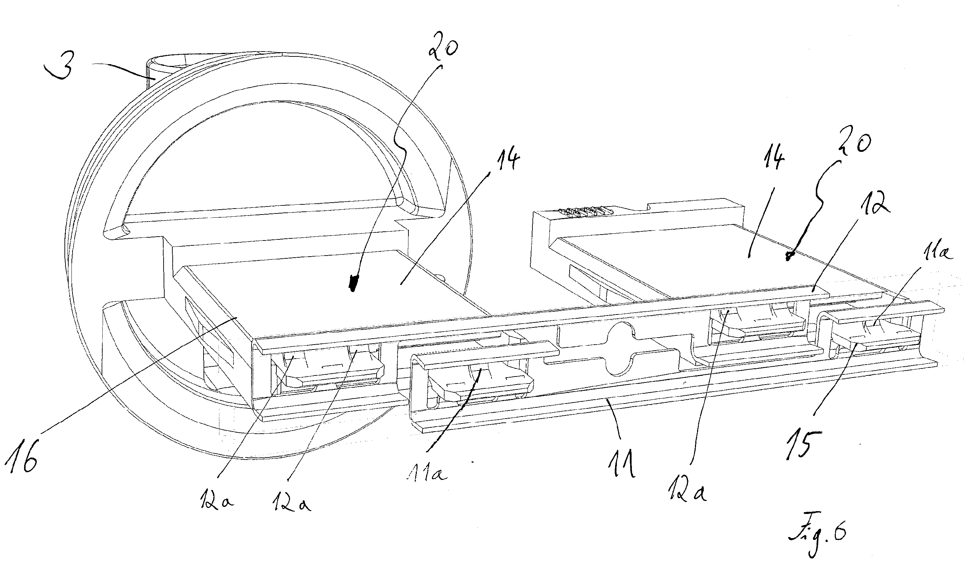

In den Figuren 1 und 2 ist eine Tankheizung in verschiedenen Ansichten dargestellt. Die Tankheizung hat ein Kunststoffgehäuse, das ein Unterteil 1 und einen mit dem Unterteil 1 verschweißten Gehäusedeckel 2 aufweist. Der Gehäusedeckel 2 hat eine Öffnung, in die ein Steckverbindergehäuse 3 eingepasst ist. Die Öffnung des Gehäusedeckels 2 ist also durch das Steckverbindergehäuse 3 verschlossen. In der Öffnung ist ein das Steckverbindergehäuse 3 umgebender Dichtungsring angeordnet, so dass ein evtl. Spalt zwischen dem Steckverbindergehäuse 3 und dem Gehäusedeckel 2 abgedichtet ist. Zur Verbesserung der Abdichtung können auch zwei oder mehr Dichtungsringe angeordnet werden, beispielsweise O-Ringe. Die Dichtungsringe können in einer Ringnut angeordnet sein, beispielsweise in einer Ringnut des Steckverbinders 3. Das Steckverbindergehäuse 3 und ein damit verbundener PTC-Heizer 20 (siehe Fig. 6) können je nach Anforderungen eines Automobilherstellers ausgebildet sein und bei gleichem Gehäuse 1, 2 auch um 180° gedreht in bzw. an dem Wärmeleitkörper 10 angeordnet werden. Weitere Varianten ergeben sich bei gleichem Wärmeleitkörper 10 und Unterteil 1, aber unterschiedlichem Deckel 2. Bei einer kreisrunden Ringwand 4 ist es grundsätzlich bei einer entsprechend gedrehten Tankheizung sogar möglich das Steckverbindergehäuse 3 in einer beliebigen Orientierung an der Tankwand zu befestigen.

Der Gehäusedeckel 2 weist eine Ringwand 4 auf, welche die Öffnung und den Steckverbinder 3 umgibt. Zur Montage in einem Tank wird die Tankheizung mit ihrer Ringwand 4 in eine passende Öffnung einer Tankwand eingesetzt und dann mit der Tankwand verschweißt.

Der Gehäusedeckel 2 kann beispielsweise aus hochdichtem Polyethylen (HDPE) hergestellt werden sein, einem Material, das für Flüssigkeitstanks in Kraftfahrzeugen gebräuchlich ist und deshalb die Verschweißung erleichtert. Das Kunststoffgehäuse des Steckverbinders 3 kann vorteilhaft aus einem anderen Kunststoff, der den elektrischen und mechanischen Anforderungen des Steckverbindergehäuses 3 besser gerecht wird, hergestellt sein, beispielsweise aus Polyamid.

Das Gehäuseunterteil 1 der Tankheizung ist bevorzugt aus demselben Kunststoff wie der Gehäusedeckel 2 hergestellt und mit diesem verschweißt. Der Gehäusedeckel 2 überragt mit seiner äußeren Kontur allseitig die Außenkante des Unterteils. Um das Positionieren des Gehäusedeckels 2 auf dem Unterteil 1 und die Verschweißung zu erleichtern, kann der Gehäusedeckel 2 im überragenden Bereich einen ihm zugewandten Rand 1a des Unterteils 1 umschließen, beispielsweise wie dies insbesondere in der Schnittansicht der Figur 3 zu sehen ist.

Der Gehäusedeckel 2 weist zudem Laschen 5 auf, die in einen Raum zwischen benachbarten Kühlrippen hineinragen und schwenkbar beweglich mit dem übrigen Gehäusedeckel 2 verbunden sind. Die Laschen 5 fördern eine Umströmung der Kühlrippen der Tankheizung und können somit die Wärmeübertragung an die umgebende Flüssigkeit verbessern. Wie insbesondere in Fig. 3 dargestellt, sind die Laschen 5 über eine Schwachstelle 6, beispielsweise eine Nut mit dem übrigen Gehäusedeckel 2 verbunden und auf diese Weise schwenkbar beweglich.

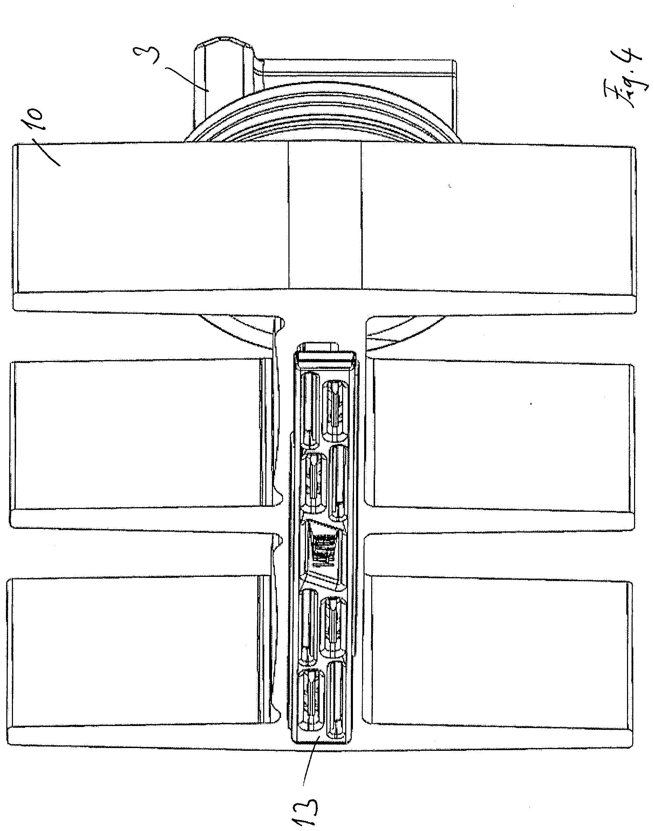

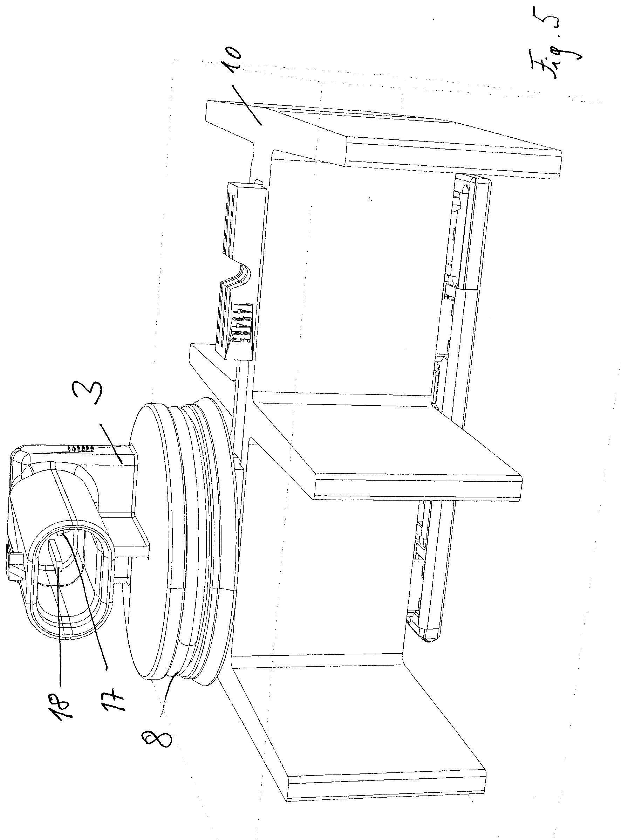

In den Figuren 4 und 5 ist die Tankheizung ohne das Kunststoffgehäuse dargestellt, sodass der in dem Kunststoffgehäuse angeordnete Wärmeleitkörper 10 sowie in Figur 4 auch der als O-Ring ausgebildete Dichtungsring 8, der in der Öffnung des Gehäusedeckels 2 das Steckverbindergehäuse 3 umgibt, zu sehen sind. Der Wärmeleitkörper 10 ist aus Metall und weist Kammern auf, in denen PTC-Heizer angeordnet sind. In dem dargestellten Ausführungsbeispiel sind die Kammern als durch den Wärmeleitkörper 10 hindurchgehende Kanäle dargestellt, in welche die PTC-Heizer eingeschoben sind.

Die PTC-Heizer 20 sind insbesondere in Figur 6 dargestellt, welche die Tankheizung ohne Kunststoffgehäuse und ohne Wärmeleitkörper zeigt. Die PTC-Heizer 20 enthalten jeweils einen keramischen PTC-Widerstand und zwei Kontaktbleche 14, 15 zwischen denen der PTC-Widerstand angeordnet ist. Die Kontaktbleche sind ein- oder beidseitig durch Isolierlagen elektrisch vom Wärmeleitkörper isoliert. Der PTC-Widerstand und die beiden Kontaktbleche sind mit einem Montagerahmen 16 zu einer Einheit zusammengefasst, sodass sich der PTC-Heizer leicht in einen der dazu vorgesehenen Kanäle des Wärmeleitkörpers 10 einschieben lässt. Die Anzahl der PTC-Heizer 20 kann praktisch beliebig gewählt werden. Bei dem dargestellten Ausführungsbeispiel sind zwei PTC-Heizer 20 vorhanden. Der Montagerahmen 16 eines dieser beiden PTC-Heizer 20 ist einstückig mit dem Steckverbindergehäuse 3 ausgebildet. Die Kontaktbleche 14, 15 dieses PTC-Heizers 20 können einstückig mit Steckkontakten 17, 18 des Steckverbinders ausgebildet sein, beispielsweise indem die Kontaktbleche 14, 15 einen entsprechend geformten Fortsatz haben, der die Steckkontakte des Steckverbinders bildet.

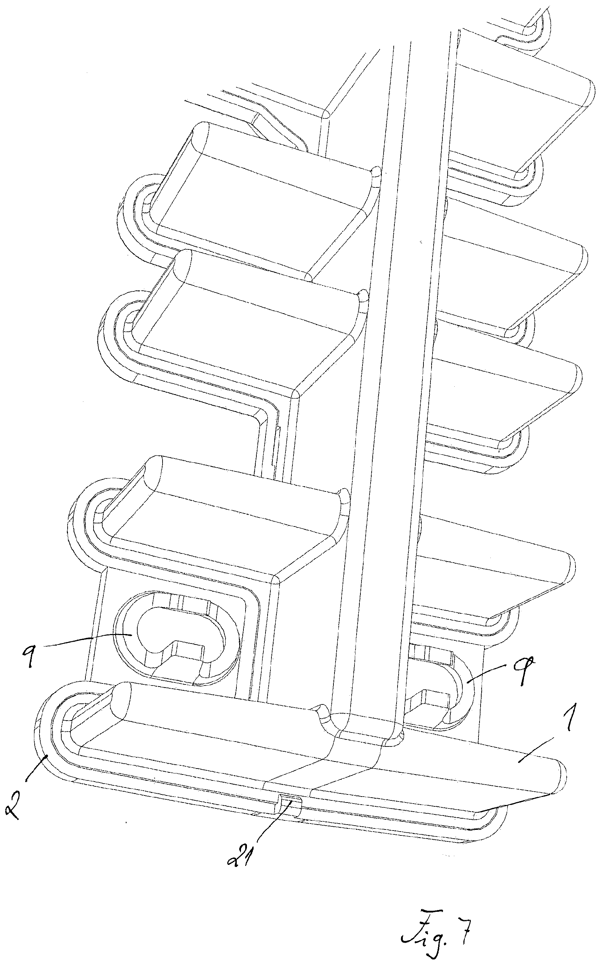

Die elektrische Verbindung zu dem zweiten oder weiteren PTC-Heizer erfolgt über eine Kontaktschiene, die in dem Unterteil des Kunststoffgehäuses zwischen dessen Boden und dem Wärmleitkörper 10 angeordnet ist. Bei dem dargestellten Ausführungsbeispiel sind zwei Kontaktschienen 11, 12 für den Potenzial- bzw. Massekontakt vorgesehen. Dabei ist es prinzipiell unerheblich, ob die beiden in Fig. 6 dargestellten PTC-Heizer 20 im gleichen Wärmeleitkörper oder in zwei verschiedenen Wärmeleitkörpern angeordnet sind. Somit lassen sich die Tankheizer beliebig modular erweitern. Beispielsweise sind in Fig. 7 zwei in den Figuren 4 und 5 dargestellte Wärmeleitkörper in einem einzigen Gehäuse 1, 2 angeordnet und über die Kontaktschienen 11, 12 elektrisch verbunden. Wenn nur ein Wärmeleitkörper 10 vorhanden ist und dieser zur Massekontaktierung der PTC-Heizer 20 genutzt wird, genügt eine einzige Kontaktschiene, da die PTC-Heizer 20 dann auch nur ein einziges Kontaktblech benötigen.

Die Kontaktschienen 11, 12 haben Öffnungen, in die Fortsätze der Kontaktbleche 14, 15 der PTC-Heizer gesteckt sind und so eine elektrische Kontaktierung bewirken. Diese Öffnungen können durch aus den Kontaktschienen 11,12 herausgebogene Klemmlaschen 11a, 12a gebildet sein. Die beiden Kontaktschienen 11, 12 sind von einer Halterung 13 aus Kunststoff gehalten, die in Figur 4 zu sehen ist. Die Halterung kann durch Umspritzen von einer oder mehreren Kontaktschienen 11,12 gebildet sein oder ein separates Kunststoffteil sein, das durch Aufstecken an den Kontaktschienen 11, 12 befestigt ist.

Fig. 7 zeigt einen Ausschnitt eines weiteren Ausführungsbeispiels einer Tankheizung, die größer als die vorstehend beschrieben Tankheizung ist und eine größere Anzahl von Kühlrippen aufweist. Der Deckel 2 des Kunststoffgehäuses dieser Tankheizung weist deshalb Befestigungsansätze 9 auf. Die Tankheizung kann somit einerseits über die in Fig. 6 nicht dargestellte Ringwand des Deckels 2 verschweißt werden und zusätzlich über die Befestigungsansätze 9 an einer Tankwand fixiert werden, beispielsweise durch Verrasten oder Verschweißen. Weiterhin kann der Deckel Befestigungsansätze zum Befestigen oder Halten weiterer Bauteile wie Sensoren, Ansaugrohre, Filter usw. aufweisen. Um den Deckel 2 bis zum Verschweißen an dem Unterteil 1 des Kunststoffgehäuses zu fixieren, kann der Deckel 2 Rasthaken 21 zur Verrastung mit dem Unterteil 1 aufweisen. Im Übrigen kann die Tankheizung wie die vorstehend beschriebene Tankheizung aufgebaut sein.

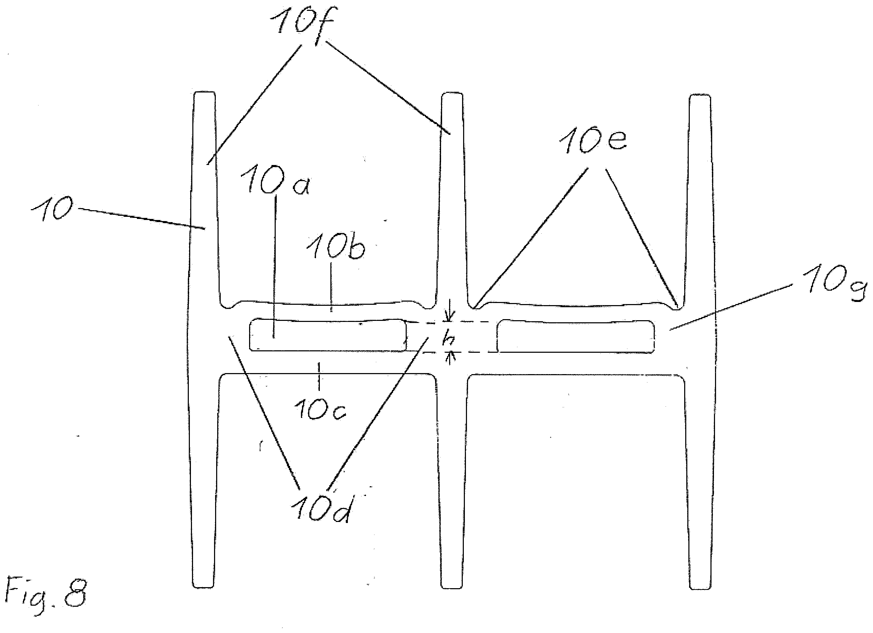

Fig. 8 zeigt lediglich den Wärmeleitkörper 10 mit Rippen 10f, einer verbindenden Basis 10g und für die PTC-Heizer 20 in der Basis 10g angeordnete Kammern 10a.

Eine solche hat quer zu einem Kontaktblech des PTC-Heizers verlaufende Seitenwände 10d sowie eine Bodenwand 10c und eine Deckenwand 10b. Die Seitenwände 10d haben bevorzugt eine Stärke, die größer als die Stärke der Bodenwand 10c und größer als die Stärke der Deckenwand 10b ist. Äußerst bevorzugt reichen die einer benachbarten Kammer 10a zugewandten Seitenwände 10g auf ihrer ganzen Höhe h von einer Kammer 10a bis zur benachbarten Kammer 10a. Wie in Fig. 4 und 6 gut zu erkennen ist, können dadurch die Kontaktbleche 14, 15 der PTC-Heizer 20 und die zugehörigen Kontaktschienen 11, 12 auch ohne seitliche Abwinklung unterhalb der Basis angeordnet werden, was die Fertigung vorteilhaft vereinfacht.

Der Wärmeleitkörper 10 weist beidseits der Kammern 10a an der Deckenwand 10b eine Begrenzungsnut 10e auf. Sie bewirken eine Begrenzung des Verpressdruckes.

### Bezugszeichenliste

- 1: Unterteil
- 1: a Rand
- 2: Gehäusedeckel
- 3: Steckverbindergehäuse
- 4: Ringwand
- 5: Lasche
- 6: Nut
- 8: Dichtungsring
- 9: Befestigungsansatz
- 10: Wärmeleitkörper
- 10a: Kammer
- 10b: Deckenwand
- 10c: Bodenwand
- 10d: Seitenwand
- 10e: Begrenzungsnut
- 11: Kontaktschiene
- 11a: Klemmlasche
- 12: Kontaktschiene
- 12a: Klemmlasche
- 13: Halterung
- 14: Kontaktblech
- 15: Kontaktblech
- 16: Montagerahmen
- 17: Steckkontakt
- 18: Steckkontakt
- 20: PTC-Heizer
- 21: Rasthaken

## Patentansprüche

1. Tankheizung für ein Kraftfahrzeug, mit
einem Kunststoffgehäuse, das ein Unterteil (1) und einen mit dem Unterteil (1) verschweißten Gehäusedeckel (2) aufweist,
einem Wärmeleitkörper (10) aus Metall, der zusammen mit wenigstens einem PTC-Heizer (20) in dem Kunststoffgehäuse angeordnet ist,
einem elektrischen Steckverbinder, um den oder die PTC-Heizer (20) an eine Stromquelle anzuschließen, wobei der Steckverbinder ein Steckverbindergehäuse (3) aus Kunststoff aufweist und
die elektrischen Anschlüsse des von dem Kunststoffgehäuse umgebenen PTC-Heizers (20) durch den Gehäusedeckel (2) hindurchgeführt sind,
**dadurch gekennzeichnet, dass** der Gehäusedeckel (2) eine Öffnung aufweist, in die das Steckverbindergehäuse (3) eingepasst ist, so dass die Öffnung durch das Steckverbindergehäuse (3) dicht verschlossen ist

2. Tankheizung nach Anspruch 1, **dadurch gekennzeichnet, dass** der Gehäusedeckel (2) eine Ringwand (4) aufweist, welche die Öffnung umgibt.

3. Tankheizung nach einem der vorstehenden Ansprüche, **dadurch gekennzeichnet, dass** die Öffnung mit einem das Steckverbindergehäuse (3) umgebenden Dichtungsring (8) abgedichtet ist.

4. Tankheizung nach einem der vorstehenden Ansprüche, **dadurch gekennzeichnet, dass** der Gehäusedeckel (2) einen ihm zugewandten Rand (1a) des Unterteils (1) umschließt.

5. Tankheizung nach einem der vorstehenden Ansprüche, **dadurch gekennzeichnet, dass** der oder die PTC-Heizer (20) in Kammern des Wärmeleitkörpers (10) angeordnet sind, die als durch den Wärmeleitkörper (10) hindurchgehende Kanäle ausgebildet sind.

6. Tankheizung nach Anspruch 5, **dadurch gekennzeichnet, dass** die Kammern quer zu einem Kontaktblech des PTC-Heizers (20) verlaufende Seitenwände sowie eine Bodenwand und eine Deckenwand aufweisen, wobei die Seitenwände eine Stärke haben, die größer als die Stärke der Bodenwand und größer als die Stärke der Deckenwand ist.

7. Tankheizung nach einem der vorstehenden Ansprüche, **gekennzeichnet durch** mehrere PTC-Heizer (20), wobei die PTC-Heizer (20) elektrisch mittels einer Kontaktschiene (11, 12) miteinander verbunden sind, die zwischen dem Wärmeleitkörper (10) und einem Boden des Unterteils (1) des Kunststoffgehäuses angeordnet ist.

8. Tankheizung nach einem der vorstehenden Ansprüche, **dadurch gekennzeichnet, dass** ein Kontaktelement (14, 15) des wenigstens einen PTC-Heizers (20) mittels Klemmlaschen (11a, 12a) an der Kontaktschiene (11, 12) befestigt ist.

9. Tankheizung nach Anspruch 7 oder 8, **dadurch gekennzeichnet, dass** die Kontaktschiene (11, 12) auf eine Halterung (13) aus Kunststoff aufgeklipst ist.

10. Tankheizung nach einem der vorstehenden Ansprüche, **dadurch gekennzeichnet, dass** der Steckverbinder zusammen mit dem Wärmeleitkörper (10) und dem PTC-Heizer (20) oder den PTC-Heizern (20) eine Baugruppe bildet, die in das Unterteil (1) des Kunststoffgehäuses eingesetzt ist.

11. Tankheizung nach einem der vorstehenden Ansprüche, **dadurch gekennzeichnet, dass** der oder die PTC-Heizer (20) einen Montagerahmen (16) aufweisen, in dem wenigstens ein PTC-Widerstand und wenigstens ein an dem PTC-Widerstand anliegendes Kontaktblech (14, 15) angeordnet sind, wobei das Steckverbindergehäuse (3) einstückig mit dem oder einem Montagerahmen (16) ausgebildet ist.

12. Tankheizung nach einem der vorstehenden Ansprüche, **dadurch gekennzeichnet, dass** der Steckverbinder Steckkontakte (17, 18) aufweist, die einstückig mit Kontaktblechen (11, 12) der PTC-Heizer (20) ausgebildet sind.

13. Tankheizung nach einem der vorstehenden Ansprüche, **dadurch gekennzeichnet, dass** das Kunststoffgehäuse Kühlrippen aufweist, in denen Kühlrippen des Wärmeleitkörpers (10) angeordnet sind, und der Gehäusedeckel (2) Laschen (5) aufweist, die in einen Raum zwischen benachbarten Kühlrippen hineinragen.

14. Tankheizung nach Anspruch 13, **dadurch gekennzeichnet, dass** die Laschen (5) über eine Schwachstelle, vorzugsweise eine Nut (6), schwenkbar mit dem übrigen Gehäusedeckel (2) verbunden sind.

15. Tankheizung nach einem der vorstehenden Ansprüche, **dadurch gekennzeichnet, dass** der Gehäusedeckel (2) Befestigungsansätze (9) aufweist.

## Claims

1. Tank heater for a motor vehicle, comprising
a plastic housing having a bottom part (1) and a housing cover (2) welded to the bottom part (1),
a heat-conducting body (10) made of metal, which together with at least one PTC heater (20) is arranged in the plastic housing,
an electrical connector for connecting the PTC heater(s) (20) to a power source, wherein the connector comprises a plastic connector housing (3), and
the electrical connections of the PTC heater (20) surrounded by the plastic housing are passed through the housing cover (2),
**characterized in that** the housing cover (2) has an opening into which the connector housing (3) is fitted, such that the opening is tightly closed by the connector housing (3).

2. Tank heater according to claim 1, **characterized in that** the housing cover (2) has an annular wall (4), which surrounds the opening.

3. Tank heater according to any one of the preceding claims, **characterized in that** the opening is sealed with a sealing ring (8) surrounding the connector housing (3).

4. Tank heater according to any one of the preceding claims, **characterized in that** the housing cover (2) encloses a facing rim (1a) of the bottom portion (1).

5. Tank heater according to any one of the preceding claims, **characterized in that** the PTC heater(s) (20) are arranged in chambers of the heat-conducting body (10), which chambers are formed as channels passing through the heat-conducting body (10).

6. Tank heater according to claim 5, **characterized in that** the chambers have side walls extending transversely to a contact plate of the PTC heater (20), as well as a bottom wall and a top wall, wherein the side walls have a thickness greater than the thickness of the bottom wall and greater than the thickness of the top wall.

7. Tank heater according to any one of the preceding claims, **characterized by** multiple PTC heaters (20), wherein the PTC heaters (20) are electrically connected to each other by means of a bus bar (11, 12), which is arranged between the heat-conducting body (10) and a bottom of the bottom portion (1) of the plastic housing.

8. Tank heater according to any one of the preceding claims, **characterized in that** a contact element (14, 15) of at least one PTC heater (20) is attached to the bus bar (11, 12) by means of clamping lugs (11a, 12a).

9. Tank heater according to claim 7 or 8, **characterized in that** the bus bar (11, 12) is clipped onto a holder (13) made of plastic.

10. Tank heater according to any one of the preceding claims, **characterized in that** the connector together with the heat-conducting body (10) and the PTC heater (20) or the PTC heaters (20) forms an assembly which is inserted into the bottom portion (1) of the plastic housing.

11. Tank heater according to any one of the preceding claims, **characterized in that** the PTC heater(s) (20) has/have a mounting frame (16) in which at least one PTC resistor and at least one contact plate (14, 15) attached to the PTC resistor are arranged, wherein the connector housing (3) is formed integrally with the - or a - mounting frame (16).

12. Tank heater according to any one of the preceding claims, **characterized in that** the connector has plug contacts (17, 18) which are formed integrally with contact plates (11, 12) of the PTC heaters (20).

13. Tank heater according to any one of the preceding claims, **characterized in that** the plastic housing has cooling fins in which cooling fins of the heat-conducting body (10) are arranged, and the housing cover (2) has lugs (5) which protrude into a space between adjacent cooling fins.

14. Tank heater according to claim 13, **characterized in that** the lugs (5) are connected to the remaining housing cover (2) via a weak point, preferably a groove (6), such that the lugs (5) can pivot.

15. Tank heater according to any one of the preceding claims, **characterized in that** the housing cover (2) has mounting attachments (9).

## Revendications

1. Chauffage de réservoir pour véhicule automobile, comportant
un boîtier en plastique, qui présente une partie inférieure (1) et un couvercle de boîtier (2) soudé à la partie inférieure (1),
un corps conducteur de chaleur (10) en métal, qui est disposé conjointement à au moins un chauffage PTC (20) dans le boîtier en plastique,
un connecteur électrique pour connecter le ou les chauffage(s) PTC (20) à une source d'alimentation, dans lequel le connecteur présente un boîtier de connecteur (3) en plastique et
les connexions électriques du chauffage PTC (20) entouré par le boîtier en plastique sont passées à travers le couvercle de boîtier (2),
**caractérisé en ce que** le couvercle de boîtier (2) présente une ouverture, dans laquelle le boîtier de connecteur (3) est inséré de sorte que l'ouverture soit hermétiquement fermée par le boîtier de connecteur (3).

2. Chauffage de réservoir selon la revendication 1, **caractérisé en ce que** le couvercle de boîtier (2) présente une paroi annulaire (4), qui entoure l'ouverture.

3. Chauffage de réservoir selon une des revendications précédentes, **caractérisé en ce que** l'ouverture est obturée par une bague d'étanchéité (8) entourant le boîtier de connecteur (3).

4. Chauffage de réservoir selon une des revendications précédentes, **caractérisé en ce que** le couvercle de boîtier (2) enserre un bord (la) de la partie inférieure (1) lui faisant face.

5. Chauffage de réservoir selon une des revendications précédentes, **caractérisé en ce que** le ou les chauffage(s) PTC (20) sont disposés dans des chambres du corps conducteur de chaleur (10), qui sont configurées en canaux traversant le corps conducteur de chaleur (10).

6. Chauffage de réservoir selon la revendication 5, **caractérisé en ce que** les chambres présentent des parois latérales s'étendant transversalement à une plaque de contact du chauffage PTC (20) et une paroi de base et une paroi de sommet, dans lequel les parois latérales ont une épaisseur supérieure à l'épaisseur de la paroi de base et supérieure à l'épaisseur de la paroi de sommet.

7. Chauffage de réservoir selon une des revendications précédentes, **caractérisé par** plusieurs chauffages PTC (20), dans lequel les chauffages PTC (20) sont reliés l'un à l'autre électriquement au moyen d'un rail de contact (11, 12), qui est disposé entre le corps conducteur de chaleur (10) et une base de la partie inférieure (1) du boîtier en plastique.

8. Chauffage de réservoir selon une des revendications précédentes, **caractérisé en ce qu'**un élément de contact (14, 15) du au moins un chauffage PTC (20) est fixé au rail de contact (11, 12) au moyen de pattes de serrage (11a, 12a).

9. Chauffage de réservoir selon la revendication 7 ou 8, **caractérisé en ce que** le rail de contact (11, 12) est clipsé sur un support (13) en matière plastique.

10. Chauffage de réservoir selon une des revendications précédentes, **caractérisé en ce que** le connecteur conjointement au corps conducteur de chaleur (10) et au chauffage PTC (20) ou aux chauffages PTC (20) forment un ensemble qui est inséré dans la partie inférieure (1) du boîtier en plastique.

11. Chauffage de réservoir selon une des revendications précédentes, **caractérisé en ce que** le ou les chauffage(s) PTC (20) présentent un cadre de montage (16), dans lequel au moins une résistance PTC et au moins une plaque de contact (14, 15) adjacente à la résistance PTC sont disposées, dans lequel le boîtier de connecteur (3) est formé d'un seul tenant avec le ou un cadre de montage (16).

12. Chauffage de réservoir selon une des revendications précédentes, **caractérisé en ce que** le connecteur présente des contacts enfichables (17, 18), qui sont configurés d'un seul tenant avec des plaques de contact (11, 12) du chauffage PTC (20).

13. Chauffage de réservoir selon une des revendications précédentes, **caractérisé en ce que** le boîtier en plastique présente des ailettes de refroidissement, dans lesquelles sont disposées des ailettes de refroidissement du corps conducteur de chaleur (10), et le couvercle de boîtier (2) présente des languettes (5), qui dépassent en saillie dans un espace entre des ailettes de refroidissement adjacentes.

14. Chauffage de réservoir selon la revendication 13, **caractérisé en ce que** les languettes (5) sont reliées de manière pivotantes au reste du couvercle du boîtier (2) par l'intermédiaire d'un point faible, de préférence une rainure (6).

15. Chauffage de réservoir selon une des revendications précédentes, **caractérisé en ce que** le couvercle de boîtier (2) présente des pattes de fixation (9).
